# EUROPÄISCHE PATENTANMELDUNG

(11) **EP 3 026 554 A1**
(43) Veröffentlichungstag der Anmeldung: **01.06.2016**
(21) Anmeldenummer: 14194850.5
(22) Anmeldetag: 26.11.2014
(51) Int. Cl.: G06F 9/50

(54) **Verfahren zum Ermöglichen einer externen Bearbeitung eines zentral gespeicherten Lageplandatensatzes**

(71) Anmelder: MIQ-Systems AG, 29345 Unterlüß (DE)
(72) Erfinder: Düffelmeyer, Marc, 13467 Berlin (DE); Lawrenz, Bernd, 14167 Berlin (DE)
(74) Vertreter: Fischer, Uwe

(57) **Zusammenfassung**

Die Erfindung bezieht sich auf ein Verfahren zum Ermöglichen einer externen Bearbeitung eines zentral gespeicherten Lageplandatensatzes (LD). Erfindungsgemäß ist vorgesehen, dass der Lageplandatensatz (LD) nach zumindest einer vorgegebenen Segmentierungsregel in Lageplansegmente (LD1, LD2, LD3, LD4) segmentiert wird, für jedes Lageplansegment (LD1, LD2, LD3, LD4) jeweils eine von einem Webbrowser (WB) bearbeitbare Einzelbilddatei (E1, E2, E3, E4) erzeugt wird und die Einzelbilddateien (E1, E2, E3, E4) zur bilddateiindividuellen Bearbeitung über ein Datennetz (20) zur externen Bearbeitung zur Verfügung gestellt werden.

## Beschreibung

Die Erfindung bezieht sich auf ein Verfahren zum Ermöglichen einer externen Bearbeitung eines zentral gespeicherten Lageplandatensatzes mittels externer Recheneinrichtungen, einen Zentralrechner zur Durchführung eines solchen Verfahrens sowie einen Speicher mit einem Programm, das zur Programmierung eines Zentralrechners zwecks Durchführung eines solchen Verfahrens geeignet ist.

Der Erfindung liegt die Aufgabe zugrunde, ein Verfahren zur Bearbeitung eines Lageplandatensatzes durchzuführen, das sich einfach und ohne großen hardwaremäßigen Aufwand, insbesondere auf der Seite der externen Recheneinrichtungen, durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass der Lageplandatensatz nach zumindest einer vorgegebenen Segmentierungsregel in Lageplansegmente segmentiert wird, für jedes Lageplansegment jeweils eine von einem Webbrowser bearbeitbare Einzelbilddatei erzeugt wird und die Einzelbilddateien zur bilddateiindividuellen Bearbeitung über ein Datennetz zur externen Bearbeitung zur Verfügung gestellt werden.

Ein wesentlicher Vorteil des erfindungsgemäßen Verfahrens ist darin zu sehen, dass eine Bearbeitung des zentral gespeicherten Lageplandatensatzes aufgrund der erfindungsgemäß vorgesehenen Segmentierung ohne großen Aufwand auch extern, also beispielsweise mittels externer Recheneinrichtungen, möglich ist. So ermöglicht es das erfindungsgemäße Verfahren, eine Änderung eines Lageplandatensatzes durchzuführen, ohne den gesamten Lageplandatensatz lokal zur Verfügung zu haben, indem lediglich einzelne Lageplansegmente des Lagenplandatensatzes darstellende Einzelbilddateien aufgerufen und bilddateiindividuell bearbeitet werden.

Als vorteilhaft wird es angesehen, wenn nach der Bearbeitung der Einzelbilddateien deren Eintragungen in den ganzheitlichen Lageplandatensatz übernommen werden und die Einzelbilddateien anschließend gelöscht oder archiviert werden.

Die Einzelbilddateien werden bevorzugt mit einem Zentralrechner erzeugt, und die Einzelbilddateien werden vorzugsweise zur Bearbeitung berechtigten externen Recheneinrichtungen über das Internet zur Verfügung gestellt.

Bezüglich der Segmentierung ist es vorteilhaft, wenn die zumindest eine vorgegebene Segmentierungsregel vorsieht oder zumindest auch vorsieht, dass die Segmentierung in Lageplansegmente unter Berücksichtigung der jeweiligen Datenrate vorgenommen wird, die das Datennetz zwischen dem Zentralrechner und den zur externen Bearbeitung berechtigten Recheneinrichtungen zur Verfügung stellt, wobei die Lageplansegmente und die resultierenden Einzelbilddateien umso größer gewählt werden, je größer die Datenrate ist.

Alternativ oder zusätzlich kann vorgesehen sein, dass die zumindest eine vorgegebene Segmentierungsregel vorsieht oder zumindest auch vorsieht, dass die Segmentierung in Lageplansegmente unter Berücksichtigung der Rechenleistung vorgenommen wird, die die zur externen Bearbeitung berechtigten Recheneinrichtungen aufweisen, wobei die Lageplansegmente und die resultierenden Einzelbilddateien umso größer gewählt werden, je größer die Rechenleistung ist.

Bevorzugt misst der Zentralrechner die Rechenleistung und/- oder die Datenrate und bestimmt anhand der gemessenen Rechenleistung und/oder der gemessenen Datenrate die Größe der Lageplansegmente und die der resultierenden Einzelbilddateien.

Vorzugsweise erfolgt die Segmentierung in Lageplansegmente außerdem unter Berücksichtigung einer vorgegebenen maximalen Dateigröße der Einzelbilddateien, wobei die Lageplansegmente und die resultierenden Einzelbilddateien derart gewählt werden, dass die Dateigröße jeder der Einzelbilddateien maximal so groß wie die vorgegebene maximale Dateigröße ist.

Demgemäß wird es auch als vorteilhaft angesehen, wenn der Zentralrechner die Rechenleistung und/oder die Datenrate misst und anhand der gemessenen Rechenleistung und/oder der gemessenen Datenrate sowie anhand der vorgegebenen maximalen Dateigröße die Größe der Lageplansegmente und die der resultierenden Einzelbilddateien bestimmt.

Die Erfindung bezieht sich darüber hinaus auf ein Verfahren zum Bearbeiten eines von einem Zentralrechner gemäß dem oben beschriebenen Verfahren bereitgestellten Lageplandatensatzes, wobei mit einem Webbrowser einer externen Recheneinrichtung zumindest eine der Einzelbilddateien über das Datennetz bearbeitet und modifiziert wird.

Bezüglich der letztgenannten Verfahrensvariante wird es als besonders vorteilhaft angesehen, wenn - nach Abschluss der Bearbeitung und Modifikation der Einzelbilddatei durch den Webbrowser - der Zentralrechner die modifizierte Einzelbilddatei löscht oder archiviert, deren Bilddaten zuvor in den zentralen Lageplandatensatz übernimmt und diesen zur weiteren externen Bearbeitung, insbesondere durch Webbrowser derselben oder anderer externer Recheneinrichtungen, vorzugsweise gemäß dem oben beschriebenen Verfahren, wieder über das Datennetz zur Verfügung stellt.

Vorzugsweise erzeugt der Zentralrechner - nach Abschluss der Bearbeitung und Modifikation der Einzelbilddatei(en) durch den oder die Webbrowser - jeweils einen modifizierten Lageplandatensatz, und zwar auf der Basis der modifizierten Einzelbilddatei(en) und der unmodifiziert gebliebenen Einzelbilddatei(en). Nach der Erstellung des modifizierten Lageplandatensatzes löscht oder archiviert der Zentralrechner vorzugsweise die Einzelbilddateien.

Bei der letztgenannten Variante ist es vorteilhaft, wenn der Zentralrechner nach dem Erzeugen des modifizierten Lageplandatensatzes den modifizierten Lageplandatensatz nach zumindest einer vorgegebenen Segmentierungsregel jeweils erneut segmentiert, und zwar in modifizierte Lageplansegmente, für jedes modifizierte Lageplansegment jeweils eine von einem Webbrowser bearbeitbare neue Einzelbilddatei erzeugt und die neuen Einzelbilddateien zur bilddateiindividuellen Bearbeitung über ein Datennetz zur externen Bearbeitung wieder zur Verfügung stellt.

Vorteilhaft ist es, wenn der Zentralrechner die Rechenleistung und/oder die Datenrate misst und anhand der gemessenen Rechenleistung und/oder der gemessenen Datenrate die Größe der modifizierten Lageplansegmente und die der resultierenden neuen Einzelbilddateien bestimmt.

Die Erfindung bezieht sich darüber hinaus auf einen Zentralrechner, der zur Durchführung des oben beschriebenen Verfahrens geeignet ist. Erfindungsgemäß ist bezüglich eines solchen Zentralrechners vorgesehen, dass dieser derart programmiert ist, dass er einen Lageplandatensatz nach zumindest einer vorgegebenen Segmentierungsregel in Lageplansegmente segmentiert, für jedes Lageplansegment jeweils eine von einem Webbrowser bearbeitbare Einzelbilddatei erzeugt, und die Einzelbilddateien zur bilddateiindividuellen Bearbeitung über ein Datennetz zur externen Bearbeitung zur Verfügung stellt.

Bezüglich der Vorteile des erfindungsgemäßen Zentralrechners sei auf die obigen Ausführungen im Zusammenhang mit dem erfindungsgemäßen Verfahren verwiesen.

Vorzugsweise löscht oder archiviert der Zentralrechner nach der externen Bearbeitung der Einzelbilddateien durch externe Browser diese und übernimmt deren Daten bzw. Eintragungen in den ganzheitlichen Lageplandatensatz.

Besonders vorteilhaft ist es, wenn - nach Abschluss der Bearbeitung und Modifikation der Einzelbilddatei durch den Webbrowser - der Zentralrechner die modifizierte Einzelbilddatei löscht oder archiviert, deren Bilddaten in den zentralen Lageplandatensatz übernimmt und diesen zur weiteren externen Bearbeitung, insbesondere durch Webbrowser derselben oder anderer externer Recheneinrichtungen, wieder über das Datennetz zur Verfügung stellt.

Die Erfindung bezieht sich darüber hinaus auf einen Speicher mit einem darin gespeicherten Programm zur Programmierung eines Zentralrechners. Erfindungsgemäß zeichnet sich der Speicher dadurch aus, dass das darin gespeicherte Programm bei Ausführung durch den Zentralrechner diesen derart programmiert, dass der Zentralrechner einen Lageplandatensatz nach zumindest einer vorgegebenen Segmentierungsregel in Lageplansegmente segmentiert, für jedes Lageplansegment jeweils eine von einem Webbrowser bearbeitbare Einzelbilddatei erzeugt, und die Einzelbilddateien zur bilddateiindividuellen Bearbeitung über ein Datennetz zur externen Bearbeitung zur Verfügung stellt.

Im Rahmen der Bearbeitung des Lageplandatensatzes wird vorzugsweise ein Lageplan für eine Bebauung, also ein Bebauungsplan, ein Lageplan für elektrische, elektronische oder mechanische Komponenten einer elektrischen, elektronischen oder mechanischen Anlage, also ein Konstruktionslageplan, oder ein sonstiger Plan bearbeitet, auf dem Elemente und deren Lage dargestellt sind.

Bei den bearbeitbaren Einzelbilddateien handelt es sich vorzugsweise um pixelbasierte oder vektorbasierte Einzelbilddateien, beispielsweise auf der Basis des BMP-Dateiformats oder des JPG-Dateiformats.

Die Erfindung wird nachfolgend anhand von Ausführungsbeispielen näher erläutert; dabei zeigen beispielhaft
- Figur 1: ein Ausführungsbeispiel für einen erfindungsgemäßen Zentralrechner, der über ein Datennetz mit externen Netzeinrichtungen in Verbindung steht,
- Figur 2: ein Ausführungsbeispiel für einen in dem Zentralrechner gemäß Figur 1 abgespeicherten Lageplandatensatz, der in Lageplansegmente segmentiert ist,
- Fig. 3-7, 9: beispielhaft die Arbeitsweise des Zentralrechners und der externen Recheneinrichtungen gemäß Figur 1 anhand eines beispielhaften Lageplanbearbeitungsverfahrens und
- Figur 8: ein Ausführungsbeispiel für einen modifizierten Lageplandatensatz, den der Zentralrechner gemäß Figur 1 nach einer Einzelbilddateibearbeitung durch eine oder mehrere externe Recheneinrichtungen gemäß Figur 1 erstellt hat.

In den Figuren werden der Übersicht halber für identische oder vergleichbare Komponenten stets dieselben Bezugszeichen verwendet.

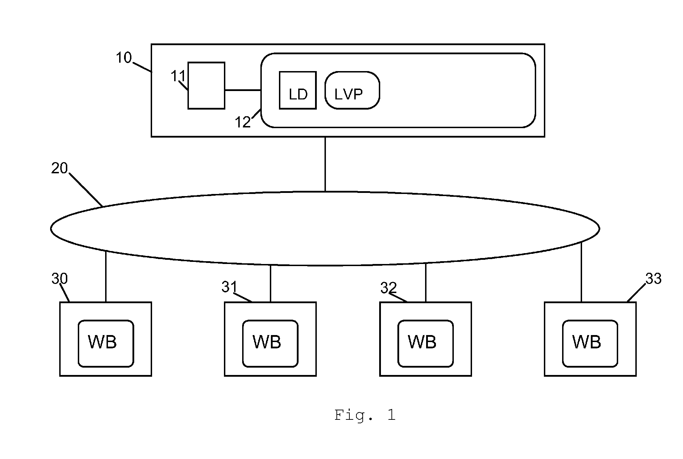

Die Figur 1 zeigt einen Zentralrechner 10, der über ein Datennetz 20, bei dem es sich beispielsweise um das Internet handeln kann, mit einer Vielzahl an externen Recheneinrichtungen in Verbindung steht, von denen in der Figur 1 vier dargestellt und mit dem Bezugszeichen 30, 31, 32 und 33 gekennzeichnet sind.

Der Zentralrechner 10 weist eine Datenverarbeitungseinrichtung 11 auf, bei der es sich beispielsweise um einen Computer, insbesondere in Form einer Mikroprozessoreinrichtung, handeln kann. Mit der Datenverarbeitungseinrichtung 11 steht ein Speicher 12 in Verbindung, in dem ein Lageplanverwaltungsprogramm LVP abgespeichert ist.

Das Lageplanverwaltungsprogramm LVP dient bei Ausführung durch die Datenverarbeitungseinrichtung 11 des Zentralrechners 10 dazu, einen ebenfalls im Speicher 12 abgespeicherten Lageplandatensatz LD zu verwalten, um eine externe Bearbeitung des Lageplandatensatzes LD durch die externen Recheneinrichtungen 30, 31, 32 und 33 über das Datennetz 20 zu ermöglichen.

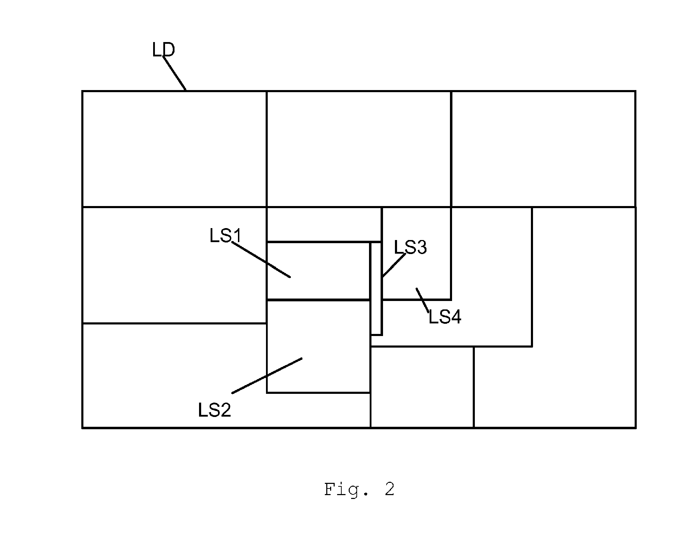

Die Figur 2 zeigt beispielhaft einen durch den im Speicher 12 abgespeicherten Lageplandatensatz LD definierten Lageplan. Der Lageplandatensatz LD kann beispielsweise einen Lageplan für eine Bebauung, also einen Bebauungsplan, einen Lageplan für elektrische, elektronische oder mechanische Komponenten einer elektrischen, elektronischen oder mechanischen Anlage, also einen Konstruktionslageplan, oder einen sonstigen Plan beschreiben bzw. definieren, auf dem Elemente und deren Lage dargestellt sind.

Die Figur 2 zeigt den Lageplandatensatz LD, nachdem dieser von der Datenverarbeitungseinrichtung 11 im Rahmen der Ausführung des Lageplanverwaltungsprogramms LVP in Lageplansegmente segmentiert worden ist, von denen in der Figur beispielhaft vier mit den Bezugszeichen LS1, LS2, LS3 und LS4 exemplarisch gekennzeichnet sind.

Die Segmentierung des Lageplandatensatzes LD in die Lageplansegmente, also beispielsweise die Lageplansegmente LS1, LS2, LS3 und LS4 in Figur 2, durch das Lageplanverwaltungsprogramm LVP erfolgt vorzugsweise unter Berücksichtigung vorgegebener Segmentierungsregeln, die in dem Lageplanverwaltungsprogramm LVP implementiert sind.

Vorzugsweise sehen die Segmentierungsregeln, die das Lageplanverwaltungsprogramm LVP berücksichtigt, unter anderem vor, dass die Segmentierung in die Lageplansegmente unter Berücksichtigung der jeweiligen Datenrate vorgenommen wird, die das Datennetz 20 zwischen dem Zentralrechner 10 und den zur externen Bearbeitung berechtigten Recheneinrichtungen 30 bis 33 zur Verfügung stellt. In diesem Falle werden die Lageplansegmente umso größer gewählt werden, je größer die Datenrate ist.

Alternativ oder zusätzlich kann vorgesehen sein, dass die Segmentierung in die Lageplansegmente unter Berücksichtigung der Rechenleistung vorgenommen wird, die die zur externen Bearbeitung berechtigten Recheneinrichtungen 30 bis 33 aufweisen. Vorzugsweise werden die Lageplansegmente und die daraus resultierenden Einzelbilddateien umso größer gewählt werden, je größer die Rechenleistung ist. Vorzugsweise wird der Zentralrechner 10 die Größe der Lageplansegmente an derjenigen berechtigten Recheneinrichtung 30 bis 33 orientieren, die die geringste Rechenleistung aufweist.

Besonders vorteilhaft ist es, wenn der Zentralrechner 10 die Rechenleistung und/oder die Datenrate misst und anhand der gemessenen Rechenleistung und/oder der gemessenen Datenrate die Größe der Lageplansegmente und die der daraus resultierenden Einzelbilddateien bestimmt.

Darüber hinaus kann das Lageplanverwaltungsprogramm LVP vorsehen, dass die Segmentierung in Lageplansegmente unter Berücksichtigung einer vorgegebenen maximalen Dateigröße der Einzelbilddateien erfolgt, wobei die Lageplansegmente und die daraus resultierenden Einzelbilddateien derart gewählt werden, dass die Dateigröße jeder der Einzelbilddateien maximal so groß wie die vorgegebene maximale Dateigröße ist.

Nachdem die Datenverarbeitungseinrichtung 11 im Rahmen der Bearbeitung des Lageplandatensatzes LP mittels des Lageplanverwaltungsprogramms LVP die Lageplansegmente gemäß Figur 2 gebildet hat, erzeugt sie für jedes der Lageplansegmente jeweils eine von einem WEB-Browser (z. B. Opera Mini, Internet Explorer, Firefox Mobile, Dolphin Browser, Boat Browser, Google Chrome, Safari und Skyfire) bearbeitbare Einzelbilddatei und speichert diese vorzugsweise ebenfalls in dem Speicher 12 des Zentralrechners 10 ab.

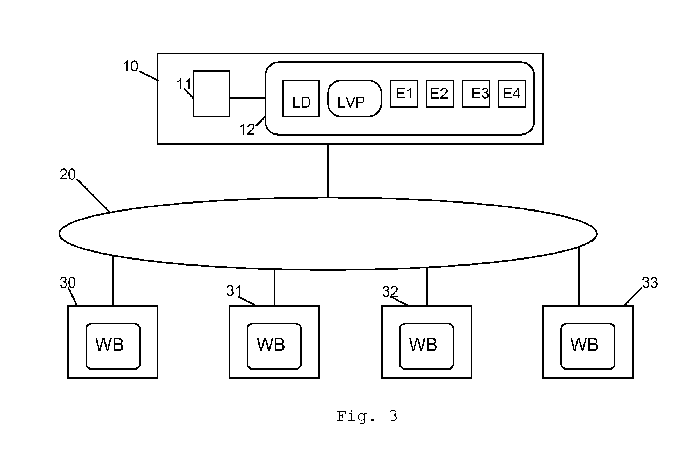

Von den Einzelbilddateien, die die Datenverarbeitungseinrichtung 11 erstellt, sind beispielhaft in der Figur 3 vier Einzelbilddateien dargestellt und dort mit dem Bezugszeichen E1, E2, E3 und E4 gekennzeichnet. Bei den Einzelbilddateien handelt es sich vorzugsweise um pixelbasierte oder vektorbasierte Einzelbilddateien, beispielsweise auf der Basis des BMP-Dateiformats oder des JPG-Dateiformats.

Die einzelnen Einzelbilddateien, die in dem Speicher 12 hinterlegt werden, werden von der Datenverarbeitungseinrichtung 11 freigeschaltet und zur externen Bearbeitung durch die externen Recheneinrichtungen 30, 31, 32 und 33 über das Datennetz 20 zur Verfügung gestellt.

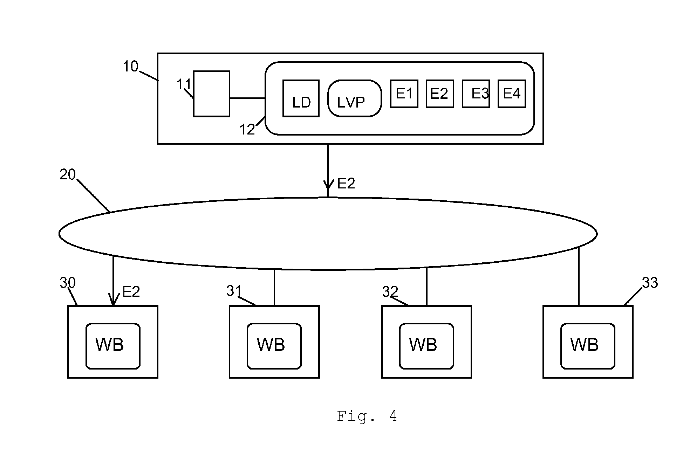

Die Figur 4 zeigt beispielhaft die Bearbeitung eines der Lageplansegmente, nämlich des Lageplansegments LS2, durch die externe Recheneinrichtung 30. So lässt sich in der Figur 4 erkennen, wie die externe Recheneinrichtung 30 über das Datennetz 20 die dem Lageplansegment LS2 zugeordnete Einzelbilddatei E2 über das Datennetz 20 aufruft und bearbeitet.

Die Bearbeitung der Einzelbilddatei E2 durch die externe Recheneinrichtung 30 erfolgt mittels eines WEB-Browsers WB, der von der externen Recheneinrichtung 30 lokal, also innerhalb der externen Recheneinrichtung 30, ausgeführt wird.

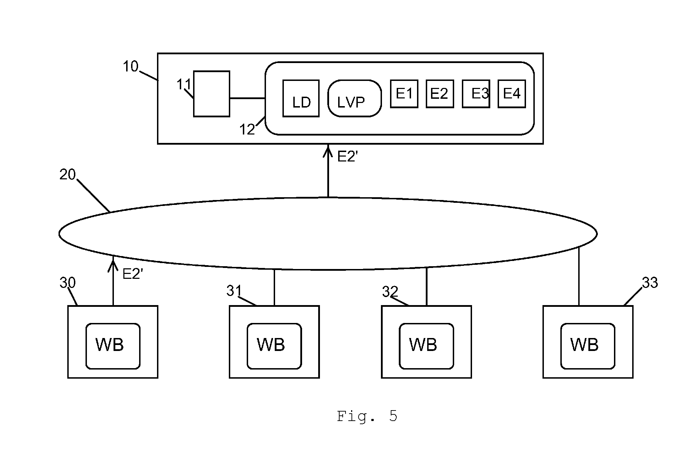

Im Rahmen der bilddateiindividuellen Bearbeitung der Einzelbilddatei E2 wird die externe Recheneinrichtung 30 mittels des WEB-Browsers WB eine modifizierte Einzelbilddatei E2' erzeugen, die über das Datennetz 20 zum Zentralrechner 10 bzw. zu dessen Datenverarbeitungseinrichtung 11 gelangt (vgl. Figur 5).

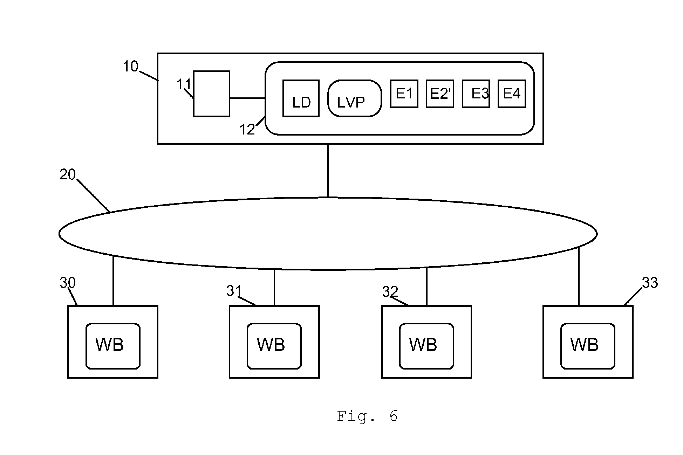

Die Datenverarbeitungseinrichtung 11 wird die modifizierte Einzelbilddatei E2' in dem Speicher 12 des Zentralrechners 10 abspeichern. Die zuvor gespeicherte Einzelbilddatei E2 wird im Rahmen dieser Speicherung entweder überschrieben bzw. gelöscht oder alternativ archiviert (vgl. Figur 6). Bei der Ausführungsvariante gemäß Figur 6 wird beispielhaft davon ausgegangen, dass die vorherige Einzelbilddatei E2 gelöscht worden ist und durch die modifizierte Einzelbilddatei E2' ersetzt worden ist.

In entsprechender Weise können die übrigen Einzelbilddateien, die zu den übrigen Lageplansegmenten des Lageplandatensatzes LD gemäß Figur 2 gehören, durch die externen Recheneinrichtungen 30, 31, 32 und 33 bearbeitet werden.

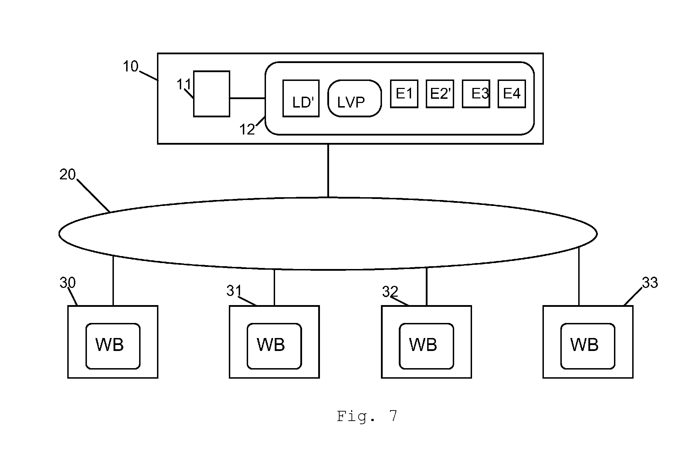

Nach Abschluss der Bearbeitung und Modifikation einer oder mehrerer Einzelbilddateien des Lagenplandatensatzes LD wird die Datenverarbeitungseinrichtung 11 auf der Basis der im Speicher 12 abgespeicherten modifizierten Einzelbilddateien sowie der unmodifiziert gebliebenen Einzelbilddateien einen neuen Lageplandatensatz LD' bilden, indem sie die jeweils aktuellen Einzelbilddateien zusammenführt und in den zentralen Lageplan bzw. Lageplansatz aufnimmt (vgl. Figur 7).

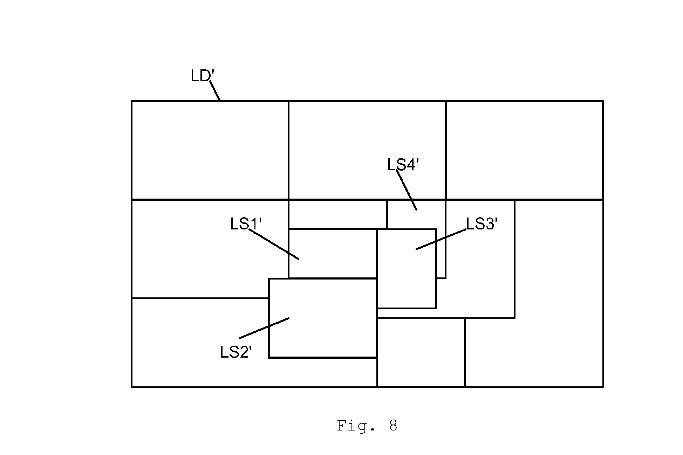

Da die Modifikation bzw. Bearbeitung der Einzelbilddateien zu einer Veränderung der Dateigröße der Einzelbilddateien geführt haben kann, beispielsweise durch die Hinzunahme oder das Weglassen von Einzelinformationen, wird die Datenverarbeitungseinrichtung 11 im Rahmen der Ausführung des Lageplanverwaltungsprogramms LVP zur Optimierung der weiteren externen Bearbeitung durch die externen Recheneinrichtungen den modifizierten Lageplandatensatz LD' anschließend vorzugsweise erneut segmentieren und modifizierte Lageplansegmente LS1', LS2', LS3', LS4',... erzeugen. Ein Ausführungsbeispiel für einen modifizierten Lageplandatensatz LD' sowie modifizierte Lageplansegmente LS1', LS2', LS3', LS4 ist in der Figur 8 gezeigt. Es lässt sich erkennen, dass sich die Lageplansegmente LS1', LS2', LS3', LS4' im Vergleich zu den Lageplansegmenten LS1, LS2, LS3 und LS4 gemäß Figur 2 verändert haben.

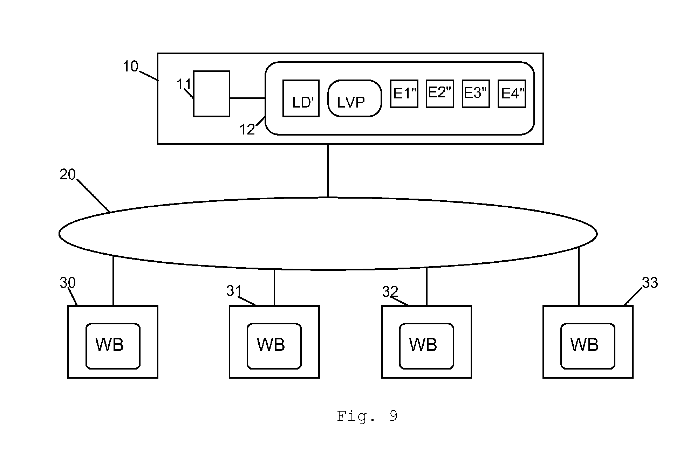

Auf der Basis der modifizierten Lageplansegmente LS1', LS2', LS3', LS4' gemäß Figur 8 wird die Datenverarbeitungsseinrichtung 11 nachfolgend neue Einzelbilddateien erzeugen und im Speicher 12 abspeichern, von denen beispielhaft in der Figur 9 vier dargestellt und dort mit dem Bezugszeichen E1", E2", E3" und E4" gekennzeichnet sind.

Bei den neuen Einzelbilddateien handelt es sich vorzugsweise ebenfalls um pixelbasierte oder vektorbasierte Einzelbilddateien, beispielsweise auf der Basis des BMP-Dateiformats oder des JPG-Dateiformats.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Zentralrechner
- 11: Datenverarbeitungseinrichtung
- 12: Speicher
- 20: Datennetz
- 30: Recheneinrichtung
- 31: Recheneinrichtung
- 32: Recheneinrichtung
- 33: Recheneinrichtung

- E1: Einzelbilddatei
- E1": neue Einzelbilddatei
- E2: Einzelbilddatei
- E2': modifizierte Einzelbilddatei
- E2": neue Einzelbilddatei
- E3: Einzelbilddatei
- E3": neue Einzelbilddatei
- E4: Einzelbilddatei
- E4": neue Einzelbilddatei
- LD: Lageplandatensatz
- LD': modifizierter Lageplandatensatz
- LS1: Lageplansegment
- LS1': modifiziertes Lageplansegment
- LS2: Lageplansegment
- LS2': modifiziertes Lageplansegment
- LS3: Lageplansegment
- LS3': modifiziertes Lageplansegment
- LS4: Lageplansegment
- LS4': modifiziertes Lageplansegment
- LVP: Lageplanverwaltungsprogramm
- WB: WEB-Browser

## Patentansprüche

1. Verfahren zum Ermöglichen einer externen Bearbeitung eines zentral gespeicherten Lageplandatensatzes (LD),
**dadurch gekennzeichnet, dass**
- der Lageplandatensatz (LD) nach zumindest einer vorgegebenen Segmentierungsregel in Lageplansegmente (LS1, LS2, LS3, LS4) segmentiert wird,
- für jedes Lageplansegment (LS1, LS2, LS3, LS4) jeweils eine von einem Webbrowser (WB) bearbeitbare Einzelbilddatei (E1, E2, E3, E4) erzeugt wird und
- die Einzelbilddateien (E1, E2, E3, E4) zur bilddateiindividuellen Bearbeitung über ein Datennetz (20) zur externen Bearbeitung zur Verfügung gestellt werden.

2. Verfahren nach Anspruch 1,
**dadurch gekennzeichnet, dass**
nach der externen Bearbeitung der Einzelbilddateien (E1, E2, E3, E4) deren Daten in den ganzheitlichen Lageplandatensatz (LD) übernommen werden und die Einzelbilddateien (E1, E2, E3, E4) gelöscht oder archiviert werden.

3. Verfahren nach einem der voranstehenden Ansprüche, **dadurch gekennzeichnet, dass**
- die Einzelbilddateien (E1, E2, E3, E4) mit einem Zentralrechner (10) erzeugt werden und
- die Einzelbilddateien (E1, E2, E3, E4) zur Bearbeitung berechtigten externen Recheneinrichtungen (30, 31, 32, 33) über das Internet zur Verfügung gestellt werden.

4. Verfahren nach einem der voranstehenden Ansprüche,
**dadurch gekennzeichnet, dass**
- die zumindest eine vorgegebene Segmentierungsregel vorsieht oder zumindest auch vorsieht, dass die Segmentierung in Lageplansegmente (LS1, LS2, LS3, LS4) unter Berücksichtigung der jeweiligen Datenrate vorgenommen wird, die das Datennetz (20) zwischen dem Zentralrechner (10) und den zur externen Bearbeitung berechtigten Recheneinrichtungen (30, 31, 32, 33) zur Verfügung stellt,
- wobei die Lageplansegmente (LS1, LS2, LS3, LS4) und die resultierenden Einzelbilddateien (E1, E2, E3, E4) umso größer gewählt werden, je größer die Datenrate ist.

5. Verfahren nach einem der voranstehenden Ansprüche, **dadurch gekennzeichnet, dass**
- die zumindest eine vorgegebene Segmentierungsregel vorsieht oder zumindest auch vorsieht, dass die Segmentierung in Lageplansegmente (LS1, LS2, LS3, LS4) unter Berücksichtigung der Rechenleistung vorgenommen wird, die die zur externen Bearbeitung berechtigten Recheneinrichtungen (30, 31, 32, 33) aufweisen,
- wobei die Lageplansegmente (LS1, LS2, LS3, LS4) und die resultierenden Einzelbilddateien (E1, E2, E3, E4) umso größer gewählt werden, je größer die Rechenleistung ist.

6. Verfahren nach einem der voranstehenden Ansprüche 4 bis 5,
**dadurch gekennzeichnet, dass**
der Zentralrechner (10) die Rechenleistung und/oder die Datenrate misst und anhand der gemessenen Rechenleistung und/oder der gemessenen Datenrate die Größe der Lageplansegmente (LS1, LS2, LS3, LS4) und die der resultierenden Einzelbilddateien (E1, E2, E3, E4) bestimmt.

7. Verfahren nach einem der voranstehenden Ansprüche,
**dadurch gekennzeichnet, dass**
- die zumindest eine vorgegebene Segmentierungsregel vorsieht oder zumindest auch vorsieht, dass die Segmentierung in Lageplansegmente (LS1, LS2, LS3, LS4) unter Berücksichtigung einer vorgegebenen maximalen Dateigröße der Einzelbilddateien (E1, E2, E3, E4) erfolgt,
- wobei die Lageplansegmente (LS1, LS2, LS3, LS4) und die resultierenden Einzelbilddateien (E1, E2, E3, E4) derart gewählt werden, dass die Dateigröße jeder der Einzelbilddateien (E1, E2, E3, E4) maximal so groß wie die vorgegebene maximale Dateigröße ist.

8. Verfahren nach Anspruch 7,
**dadurch gekennzeichnet, dass**
der Zentralrechner (10) die Rechenleistung und/oder die Datenrate misst und anhand der gemessenen Rechenleistung und/oder der gemessenen Datenrate sowie anhand der vorgegebenen maximalen Dateigröße die Größe der Lageplansegmente (LS1, LS2, LS3, LS4) und die der resultierenden Einzelbilddateien (E1, E2, E3, E4) bestimmt.

9. Verfahren zum Bearbeiten eines von einem Zentralrechner (10) gemäß einem Verfahren nach einem der voranstehenden Ansprüche bereitgestellten Lageplandatensatzes (LD), wobei mit einem Webbrowser (WB) einer externen Recheneinrichtung (30, 31, 32, 33) zumindest eine der Einzelbilddateien (E1, E2, E3, E4) über das Datennetz (20) bearbeitet und modifiziert wird.

10. Verfahren nach Anspruch 9,
**dadurch gekennzeichnet, dass**
- nach Abschluss der Bearbeitung und Modifikation der Einzelbilddatei (E1, E2, E3, E4) durch den Webbrowser (WB) - der Zentralrechner (10) die Bilddaten der modifizierten Einzelbilddatei (E2') in den zentralen Lageplandatensatz (LD) übernimmt, die modifizierte Einzelbilddatei (E2') löscht oder archiviert und den zentralen Lageplandatensatz (LD) zur weiteren externen Bearbeitung, insbesondere durch Webbrowser (WB) derselben oder anderer externer Recheneinrichtungen (30, 31, 32, 33), vorzugsweise gemäß dem Verfahren nach einem der voranstehenden Ansprüche 1-8, wieder über das Datennetz (20) zur Verfügung stellt.

11. Verfahren nach einem der voranstehenden Ansprüche 9 bis 10,
**dadurch gekennzeichnet, dass**
- nach Abschluss der Bearbeitung und Modifikation der Einzelbilddatei (E1, E2, E3, E4) durch den Webbrowser (WB) - der Zentralrechner (10) jeweils einen modifizierten Lageplandatensatz (LD') erzeugt, und zwar auf der Basis der modifizierten Einzelbilddatei (E2') und der unmodifiziert gebliebenen Einzelbilddateien (E1, E3, E4), nach der Erstellung des modifizierten Lageplandatensatzes (LD') die Einzelbilddateien (E1, E2', E3, E4) löscht oder archiviert.

12. Verfahren nach Anspruch 11,
**dadurch gekennzeichnet, dass**
der Zentralrechner (10) nach dem Erzeugen des modifizierten Lageplandatensatzes (LD') den modifizierten Lageplandatensatz (LD') nach zumindest einer vorgegebenen Segmentierungsregel jeweils erneut segmentiert, und zwar in modifizierte Lageplansegmente (LS1', LS2', LS3', LS4'), für jedes modifizierte Lageplansegment (LS1', LS2', LS3', LS4') jeweils eine von einem Webbrowser (WB) bearbeitbare neue Einzelbilddatei (E1", E2", E3", E4") erzeugt und die neuen Einzelbilddateien (E1", E2", E3", E4") zur bilddateiindividuellen Bearbeitung über ein Datennetz (20) wieder zur externen Bearbeitung zur Verfügung stellt.

13. Verfahren nach Anspruch 12,
**dadurch gekennzeichnet, dass**
der Zentralrechner (10) die Rechenleistung und/oder die Datenrate misst und anhand der gemessenen Rechenleistung und/oder der gemessenen Datenrate die Größe der modifizierten Lageplansegmente (LS1', LS2', LS3', LS4') und die der resultierenden neuen Einzelbilddateien (E1", E2", E3", E4") bestimmt.

14. Zentralrechner (10),
**dadurch gekennzeichnet, dass**
der Zentralrechner (10) derart programmiert ist, dass er
- einen Lageplandatensatz (LD) nach zumindest einer vorgegebenen Segmentierungsregel in Lageplansegmente (LS1, LS2, LS3, LS4) segmentiert,
- für jedes Lageplansegment (LS1, LS2, LS3, LS4) jeweils eine von einem Webbrowser (WB) bearbeitbare Einzelbilddatei (E1, E2, E3, E4) erzeugt, und
- die Einzelbilddateien (E1, E2, E3, E4) zur bilddateiindividuellen Bearbeitung über ein Datennetz (20) zur externen Bearbeitung zur Verfügung stellt.

15. Speicher mit einem Programm zur Programmierung eines Zentralrechners,
**dadurch gekennzeichnet, dass**
das gespeicherte Programm bei Ausführung durch den Zentralrechner (10) diesen derart programmiert, dass der Zentralrechner (10)
- einen Lageplandatensatz (LD) nach zumindest einer vorgegebenen Segmentierungsregel in Lageplansegmente (LS1, LS2, LS3, LS4) segmentiert,
- für jedes Lageplansegment (LS1, LS2, LS3, LS4) jeweils eine von einem Webbrowser (WB) bearbeitbare Einzelbilddatei (E1, E2, E3, E4) erzeugt, und
- die Einzelbilddateien (E1, E2, E3, E4) zur bilddateiindividuellen Bearbeitung über ein Datennetz (20) zur externen Bearbeitung zur Verfügung stellt.
